# EUROPEAN PATENT SPECIFICATION

(11) **EP 2 337 702 B1**
(45) Date of publication and mention of the grant of the patent: **05.09.2012**
(21) Application number: 09740148.3
(22) Date of filing: 26.10.2009
(51) Int. Cl.: B60K 15/077

(54) **FUEL TANK EQUIPPED WITH A GAUGE AND PROCESS FOR MANUFACTURING SUCH A TANK**
MIT EINEM MESSINSTRUMENT VERSEHENER KRAFTSTOFFTANK UND VERFAHREN ZUR HERSTELLUNG SOLCH EINES TANKS
RESERVOIR DE CARBURANT EQUIPE D'UNE JAUGE ET PROCEDE DE FABRICATION ASSOCIE

(30) Priority: 24.10.2008 FR 0857241
(43) Date of publication of application: 29.06.2011
(73) Proprietor: Inergy Automotive Systems Research (Société Anonyme), 1120 Brussels (BE)
(72) Inventor: ROHAUT, Antoine, F-60350 Vieux Moulin (FR)
(74) Representative: de la Bigne, Guillaume Michel Marie
(86) International application number: PCT/EP2009/064041
(87) International publication number: WO 2010/046496

(56) References cited:
- EP-A1- 0 947 369
- DE-A1- 19 600 872
- DE-U1- 8 425 801
- US-A1- 2004 129 708

## Description

The present invention relates to a plastic fuel tank equipped with a gauge and to a process for manufacturing such a tank.

DE 196 00 872, which is regarded to represent the closest prior art, discloses such a fuel tank and process. Fuel tanks on board vehicles of various kinds must generally meet sealing and permeability standards in relation to the type of usage for which they are designed and the environmental requirements with which they must comply. Both in Europe and throughout the world we are currently experiencing a considerable tightening of the requirements concerned with limiting the emissions of pollutants into the atmosphere and into the environment in general.

To limit these emissions, the Applicant has developed a method of moulding a tank from a parison that includes at least one slot for introducing thereinto (and fastening thereto) (supports for) accessories during the actual moulding of the tank and thus avoiding drilling openings (see for example Application EP 1 110 697).

The Applicant has also developed a particular method for this fastening of (supports for) accessories (*in situ* rivet-punching, the subject of Application WO 2006/008308).

In the particular case where the accessory is composed of the fuel pump (known as the "main feed pump" and supplying the engine of the vehicle with fuel), the support in question is in fact composed of what is referred to as the "swirl pot" which makes it possible to constitute a fuel reserve for the cases where the vehicle negotiates a turn, drives on a slope, etc. or in any other situation where the pump suction point risks being exposed (no longer dipping in the fuel). The swirl pots of fuel tanks commonly serve as a support for a gauge that makes it possible to measure the level of fuel in the tank. Generally, this gauge consists of a float located at one end of an arm (metal rod) that is fixed to and pivots around one point of the swirl pot or of a gauge support integrated into the latter. This arm generally comprises a conductive part, the position of which is detected by a specific sensor that thus makes it possible to know the position of the arm, and therefore of the float, and therefore the level of fuel in the tank.

In the case of an arm of the gauge fastened to a gauge support, this generally consists of an injection-moulded plastic part equipped with two ends, one of which is fastened to the swirl pot and the other of which is free. The gauge support generally has sizing tolerances due, *inter alia,* to shrinkage of the material when it cools. Hence the position of the gauge arm, and therefore of the float, may vary as a function of the position of the free end of the gauge support so that the measurement of the level of fuel in the tank depends on the positional tolerances of the free end of the gauge support.

The present invention, as defined by the features and steps of respective claims 1 and 8 aims at solving this problem and at providing a (process for manufacturing a) fuel tank with limited effect of the positional tolerances of the gauge arm and consequently with improved precision of the measurement of the level of fuel in the tank.

For this purpose, the invention relates to a plastic fuel tank comprising a wall, a gauge, a swirl pot comprising a flexible portion, a gauge stand comprising a housing and a support bearing the gauge and equipped with 2 ends, the swirl pot and the gauge stand being fastened to the tank wall and the gauge support being positioned so that one end of the support cooperates with the housing of the gauge stand and that the other end is in forced contact with the flexible portion of the swirl pot.

The invention also relates to a process for manufacturing such a plastic fuel tank, by moulding a tubular parison cut into two sheets with the aid of a mould comprising two cavities and a core, said process comprising the following steps:
1. the parison is introduced into the mould cavities;
2. the core is introduced inside the parison, said core having first been fitted with the swirl pot and with a gauge stand comprising a housing;
3. the mould is closed so that the cavities come into leaktight contact with the core;
4. the parison is pressed against the cavities by blowing through the core and/or applying a vacuum behind the cavities;
5. using a device firmly attached to the core, the swirl pot and the gauge stand are fastened to the parison;
6. the mould is opened to withdraw the core;
7. the final moulding of the parison is carried out by blow-moulding (by injecting a pressurized fluid inside the parison) and/or thermoforming (by applying a vacuum behind the cavities);
8. the tank is demoulded.

According to a first embodiment, said process comprises the following additional steps:
9. a cut is made in a wall of the tank so as to obtain an opening; and
10. the support bearing the gauge and equipped with 2 ends is introduced into the tank through the opening and the gauge support is positioned so that one end of the support cooperates with the housing of the gauge stand and so that the other end is in forced contact with the flexible portion.

According to another embodiment of the process of the invention, the gauge support is already mounted between the swirl pot and the gauge stand before said swirl pot and gauge stand are being fixed to the parison during step 5.

The objects mentioned above (in particular the swirl pot and the gauge support) are preferably based on polyacetal, and in particular on POM (polyoxymethylene), for its mechanical resistance and its geometrical rigidity to the fuel; they may also (but less commonly, considering the size of these parts) be based on PPS (polyphenylene sulphide) which has the advantage of being very rigid or on PBT (but the latter is not compatible with alcohol fuels).

As mentioned above, the swirl pots of fuel tanks commonly serve (directly or indirectly, through the use of an intermediate gauge support as in the present invention) as a support for a gauge that makes it possible to measure the level of fuel either in the entire tank or in a pocket of this tank. Generally, this gauge consists of a float located at one end of an arm (metal rod). In the frame of the invention, the other end of the arm is fixed to the gauge support, at the end cooperating with the gauge stand housing, which ensures a fixed position thereof. In general, this arm pivots in a vertical plane.

According to the invention, the swirl pot and the gauge stand are fastened to the parison during its actual moulding to form the tank, at locations of the wall that are separated by a distance so that the gauge support can be positioned according to the invention between the swirl pot and the gauge stand. This fastening may be carried out in any known manner. Preferably, at least one of the fastening points of the swirl pot and of the gauge stand is provided with an orifice that enables rivet-punching (a common technique in the field of metallurgy that consists in moulding a rivet *in situ,* from molten material that is made to flow through an orifice of the part to be fastened and then left therein to solidify).

As regards the swirl pot, the rivet-punching orifice is preferably made in a fastening tab moulded as one part with the swirl pot or attached thereto. It may be a simple part of the accessory (being part of its overall envelope) provided with at least one orifice or with a protuberance with respect to its overall envelope provided with an orifice.

This fastening tab can have any shape: tongue provided with one or more orifices; flange surrounding the accessory and comprising several orifices, etc.

Preferably, the swirl pot is equipped with several fastening tabs, if possible distributed evenly over the latter. Most particularly preferably, each fastening tab comprises several orifices so as to distribute the load during a mechanical stress (for example, simply exerted by gravity).

Within the context of the invention, although the swirl pot is fastened to the wall of the tank, it is preferred that it can move relative to at least one of its fastening points on the wall of the tank. This mobility may be obtained in various ways. In the case where the accessory comprises at least one fastening tab, it is sufficient to ensure that this is in the form of a flexible tongue, i.e. a part that is flat (but which may be curved, folded, etc.) having a thickness, a shape and/or a constituent material that give the accessory a relative mobility with respect to the wall of the tank when it is fastened thereto.

The fastening tabs according to this variant of the invention are preferably based on a heat-resistant material in order to prevent an exaggerated deformation of the latter. Materials such as POM (polyoxymethylene), PA (polyamide), PBT (polybutylene terephthalate) and metals are particularly suitable. HDPE is less recommended as it can deform at the usage temperature, at least for the thicknesses generally considered (2 to 3 mm).

Most particularly preferably, each fastening tab is provided with a circular orifice, preferably located substantially at the centre of its zone for fastening to the tank (i.e. the zone in contact with the parison during the rivet-punching) and this circular orifice is preferably surrounded by several slots (2, 3, 4 or more) that are preferably distributed evenly over a circumference surrounding the central orifice, the purpose of which is to increase the load-bearing strength of the fastening (the component acting via its weight on the still-molten plastic in the rivet-punching zone). Generally, the fastening zone of the tab is located at a curved (folded) end of this tab.

According to a particularly preferred variant of the invention, the swirl pot is fastened to the wall of the tank while it is being moulded but with a sufficient mobility to be able to compensate for the post-moulding shrinkage which, for HDPE tanks, is about 3%.

Hence, preferably, the swirl pot is fastened to the wall of the tank with the aid of 3 rivets, one of which is made in a rigid tab and constitutes a "fixed" fastening and the other two of which are made in flexible tabs so as to render the swirl pot mobile with respect to these 2 corresponding fastening points on the wall of the tank. Most particularly preferably, the two flexible tabs allow the movement of the accessory in two perpendicular directions and also the gripping of the swirl pot by the fastening tool while absorbing the geometrical manufacturing tolerances for moulding of the swirl pot.

As regards the gauge stand, this generally consists of a plastic part that is different from the swirl pot. Said part is generally injection-moulded. The gauge stand is preferably provided with at least one rivet-punching orifice made in a rigid portion of the gauge stand. Alternatively, the gauge stand may be welded to the tank wall. Generally, this part is of a size small enough so that it can be fastened to the tank wall at a fixed location thereof, ensuring that the measurement of the level of fuel in the tank does not depend on any positional tolerance. Therefore, said part can generally be fixed to the tank wall by only one rivet/weld point. Correct???

According to the invention, the gauge stand comprises a housing capable of cooperating with one end of the gauge support. This housing preferably comprises at least one flexible portion and one rigid portion capable of together producing a clamping effect so that when one end of the gauge support has been introduced into the housing and cooperates with the flexible portion and the rigid portion, said end is held in compression between the 2 flexible and rigid portions.

More preferably, the housing of the gauge stand also comprises rigid portions that are oriented substantially orthogonal to the flexible portion and the rigid portion described in the preceding paragraph so that, when the end of the support has been introduced into the housing of the gauge stand, the rigid portions of the stand prevent any movement of the end of the gauge support in a direction approximately orthogonal to that in which the end of the support is held in compression.

In an embodiment which makes the stand easier to produce by injection-moulding, the stand housing is substantially rigid i.e. only comprises rigid portions and no flexible ones. This embodiment is easier to implement when the swirl pot, the stand and the gauge support are pre-assembled before being fixed onto the parison during the moulding of the tank. According to the invention, the swirl pot comprises a flexible portion either made as a single part with the swirl pot (the flexibility resulting, for example, from a reduced thickness and/or from a specific geometry), or in the form of an attached part (which may be, for example, made of metal). This flexible portion generally consists of an injection-moulded part produced during the manufacture of the swirl pot and constitutes a protuberance towards the outside of the swirl pot. This portion is flexible under the effect of a compressive stress and is capable of producing a spring effect in a direction opposite to that of the compressive stress. The flexible portion in general has any shape, in particular it has the shape of a strip. In a preferred embodiment of the invention, after the gauge support is mounted between the swirl pot and the stand, an additional fixation part (clip of adjusted shape for instance) can be used to prevent the support from getting disengaged from the swirl pot and the stand, for instance in case the tank is submitted to vibrations.

In the context of the invention, the gauge stand, the gauge support and the swirl pot are fastened to the wall of the tank so that the support cannot undergo either a translational movement between the flexible portion and the gauge stand, or a rotation about the longitudinal axis of the support or about an axis orthogonal to the longitudinal axis.

The term "fuel tank" is understood to mean a sealed tank (or hollow body bounded by a wall) capable of storing fuel under diverse and varied usage and environmental conditions. An example of this tank is that with which motor vehicles are fitted.

The fuel tank according to the invention is made of a plastic.

The term "plastic" means any material comprising at least one synthetic resin polymer.

Any type of plastic may be suitable. Particularly suitable plastics belong to the category of thermoplastics.

In particular, it is possible to use polyolefins, thermoplastic polyesters, polyketones, polyamides and copolymers thereof. A blend of polymers or copolymers may also be used; similarly it is also possible to use a blend of polymeric materials with inorganic, organic and/or natural fillers such as, for example, but non-limitingly: carbon, salts and other inorganic derivatives, and natural or polymeric fibres.

One polymer that is often used is polyethylene. Excellent results have been obtained with high-density polyethylene (HDPE).

The wall of the tank may be composed of a single thermoplastic layer, or of two layers. One or more other possible additional layers may, advantageously, be composed of layers made of a material that is a barrier to liquids and/or gases. Preferably, the nature and thickness of the barrier layer are chosen so as to minimize the permeability of liquids and gases in contact with the internal surface of the tank. This layer is preferably based on a barrier resin, that is to say on a resin impermeable to the fuel, such as EVOH (partially hydrolyzed ethylene/vinyl acetate copolymer) for example. Alternatively, the tank may be subjected to a surface treatment (fluorination or sulphonation) for the purpose of making it impermeable to the fuel.

The tank according to the invention preferably comprises an EVOH-based barrier layer located between the HDPE-based outer layers.

According to the invention, the tank is moulded by blow-moulding or thermoforming of a parison composed of two sheets that result from cutting one and the same extruded tubular parison as described in the aforementioned Application EP 1 110 697.

By comparison with the moulding of two separately extruded sheets, the thickness of which is constant, this approach makes it possible to use parisons of varying thickness (that is to say in which the thickness is not constant along their length), obtained using a suitable extruding device (generally an extruder equipped with a die and a mandrel, the position of which is adjustable). Such a parison takes account of the reduction in thickness that occurs during moulding at certain points on the parison, as a result of non-constant levels of deformation of the material in the mould.

No matter which technique is used for moulding the parison, this does by definition involve the use of a mould that comprises two cavities intended to be in contact with the external surface of the parison, the thermoforming or blow-moulding of the parison taking place by pressing the parison against these cavities by applying a vacuum behind the cavities and/or by using a pressurized gas injected inside the parison.

According to the invention, the mould preferably comprises a core which incorporates at least one part of the tool for fastening the swirl pot and the gauge stand. The term "core" is understood to mean a part of suitable shape and size for being able to be inserted between the mould cavities and, in particular, to be introduced into the parison while it is being moulded. Such a part has been described for example in Patent GB 1 410 215. Advantageously, this core may be used for fastening several accessories to the parison at the same time, something which the alternative devices, such as for example robot arms, cannot in general accomplish. In this variant, the accessory is fastened to the inner wall of the tank and the concave relief is pointing towards the inside of this tank.

The core may also be used to introduce the pressurized gas needed for blow-moulding the parison. Moreover, when the parison to be blown consists of two parts, the core may also be used to keep the edges of these two parts hot, at least during certain steps of the process (in general: the steps preceding the welding-together of the two parts to produce the tank). Two-part parisons are very suitable for this variant as they can be separated upon opening the mould and thus make it easier to fasten the tube.

Finally, the core may also be used at least partially for process control. For this purpose, it is possible for example to incorporate a camera into the core so as to display and check the quality of the fastening of the accessory as explained previously. This camera may also check the quality of the fastening (connection) of the fill tube (and of all the other possible components of the tank). Generally, these checks take place by image analysis. One or more sensors for measuring one or more quantities, such as force, stroke, pressure, temperature, may also be installed on the core so as to better monitor the fastening of the accessories.

In the course of the process according to one embodiment of the invention, after the tank has been demoulded, a cut is made in a wall of the tank so as to obtain an opening of sufficient dimensions to enable accessories to be introduced inside the tank. Preferably, the opening has a substantially circular cross section. In particular, the opening constitutes a stopper opening capable of allowing the introduction of a fuel feed pump.

In the process according to that embodiment the invention, a gauge support is then introduced into the tank through the opening and the gauge support is positioned so that one end of the support cooperates with the housing of the gauge stand and so that the other end is in contact with the flexible portion of the swirl pot. In this way the gauge support is held in compression between the gauge stand and the flexible strip by the spring effect created by the strip and as described above.

As explained above, according to another embodiment of the invention, the gauge support is already mounted between the swirl pot and the gauge stand before being fixed to the parison during the moulding of the tank. In that embodiment, the flexible part on the swirl pot allows to take care of the shrinkage of the tank while cooling down before being demoulded.

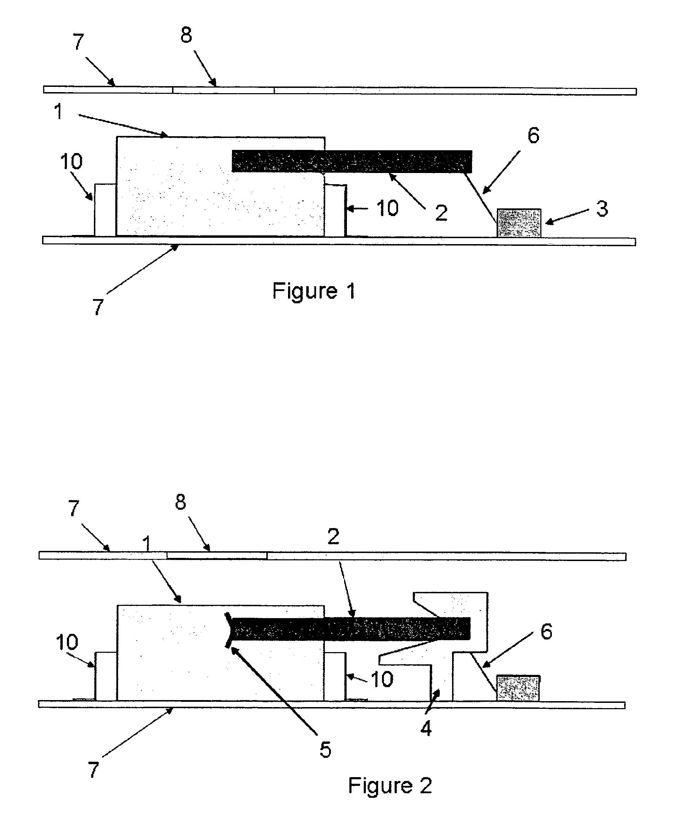

A fuel tank equipped with a swirl pot and a level gauge according to the prior art is illustrated in Figure 1.

The present invention is illustrated, non-limitingly, by Figures 2 to 4 which show:
Fig. 2: a vertical cross section through certain components of a tank according to the invention;
Fig. 3: a vertical cross section through certain components of a tank according to one preferred variant of the invention;
Fig. 3a: a portion of a cross section along AA of the tank illustrated in Fig. 3;
Fig. 3b: another portion of the cross section along AA of the tank illustrated in Fig. 3;
Figs. 4a-4e: vertical cross sections as in Fig. 3 representing successive steps of the fastening of a gauge support.

In these figures, identical numbers denote identical components.

The tank illustrated in Fig. 1 comprises a wall (7) fastened onto which is a swirl pot (1) which makes it possible to form a fuel tank and which serves as a support for a pump (not illustrated). The swirl pot (1) is fastened to the wall (7), by means of fastening tabs (illustrated schematically by 10), by rivet-punching. Such a fastening mechanism makes it possible to compensate for the shrinkage of the tank during its post-moulding cooling (i.e. to ensure that the swirl pot (1) remains fastened thereto without creating tensions in the wall (7)) while guaranteeing a fixed position of the swirl pot (1) in the tank. A gauge arm support (2) is fastened to the swirl pot (1) and is provided with one free end of a gauge arm (6) that can rotate about a point for fastening the arm (6) to the gauge support (2). The gauge arm (6) comprises a float (3) which is capable of tracking the level of fuel in the tank. Under the effect of deformations created for example by shrinkage of the material, the position of the free end of the support (2) may vary so that the position of the point for fastening the gauge arm (6) to the support (2) and of the float (3) cannot be guaranteed.

Figure 2 illustrates a tank according to the invention which comprises a gauge stand (4) and a swirl pot (1). These two components have been fastened to the wall of the tank by rivet-punching. The tank additionally comprises a gauge arm support (2) equipped with two ends, one of which - the free end - is fastened to the gauge stand (4) so that it is indexed in all directions except in translation along a longitudinal axis of the support (2) and the other end is in contact with a flexible part (5) of the metal strip type, which is fastened to the swirl pot (1). The strip (5) exerts a force on the end of the support (2) so that the latter is blocked in translation between the strip (5) and the gauge stand (4).

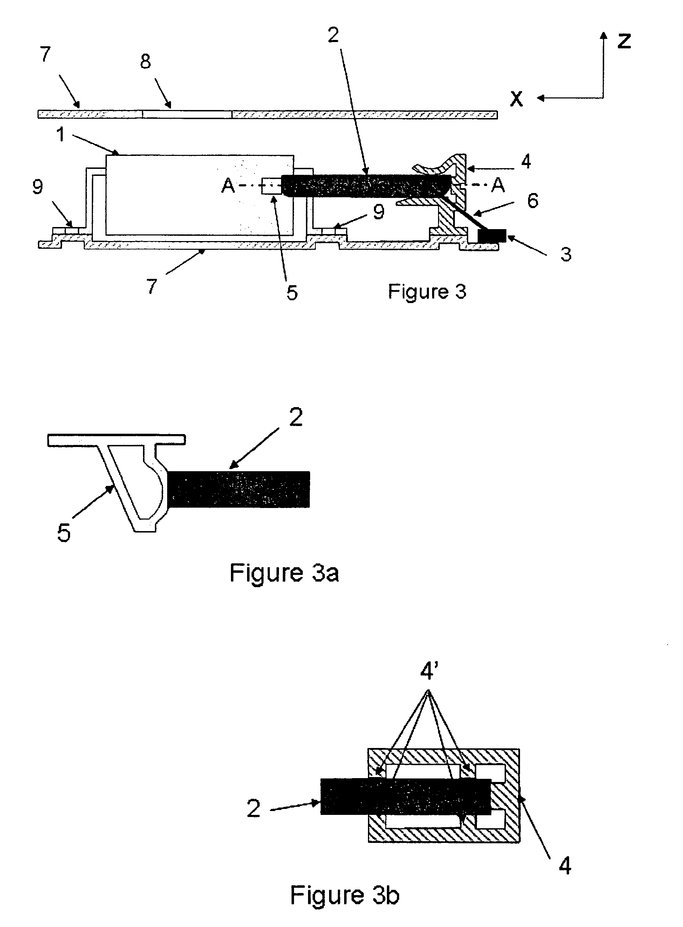

Fig. 3 represents a cross-sectional view of a preferred variant of a tank equipped with a swirl pot and with a gauge stand as illustrated in Fig. 2. The tank comprises a stopper opening (8) through which the gauge arm support (2) has been introduced into the tank. The support (2) has then been placed between the gauge stand (4) and the flexible part (5).

A variant of the flexible part (5) is illustrated in Fig. 3a and consists of an injection-moulded part integrated into the swirl pot (1) and produced during the manufacture of the latter. This part (5) comprises a portion that is flexible under the effect of a force so that when the gauge arm is placed in the tank, one end of this gauge arm comes into contact with the flexible portion of the part (5) and a force is exerted on this part so that the flexible portion acts as a spring and blocks the gauge support in translation.

Fig. 3b represents a cross-sectional view of the gauge stand (4) of the variant represented in Fig. 3. One end of the support (2) has been introduced into a housing made in the gauge stand (4). This consists of an injection-moulded part that is fastened to the wall (7) of the tank, for example by rivet-punching. The stand (4) comprises profiled portions (4') that block the support (2) and prevent any movement of the latter in the plane of the cross section AA from Fig. 3.

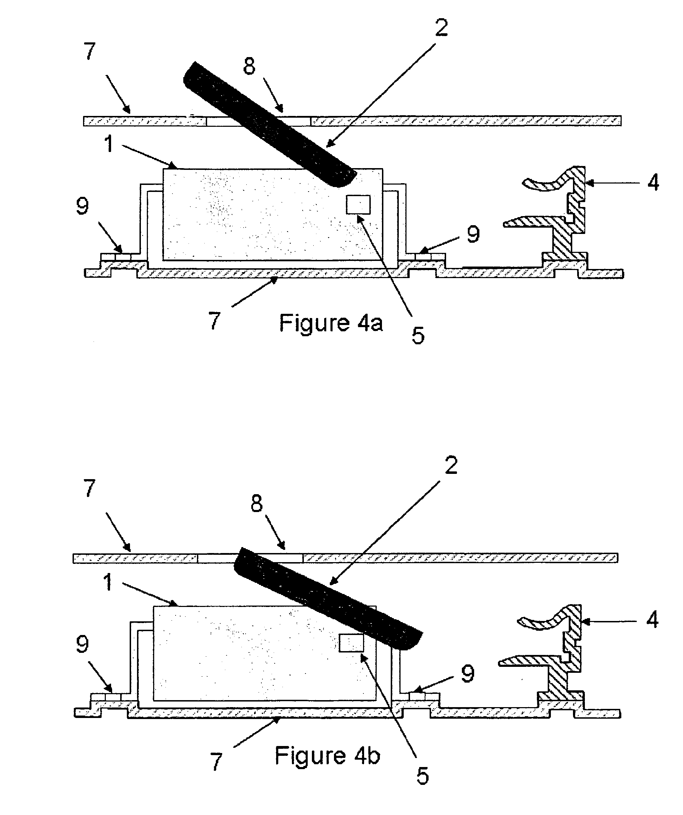

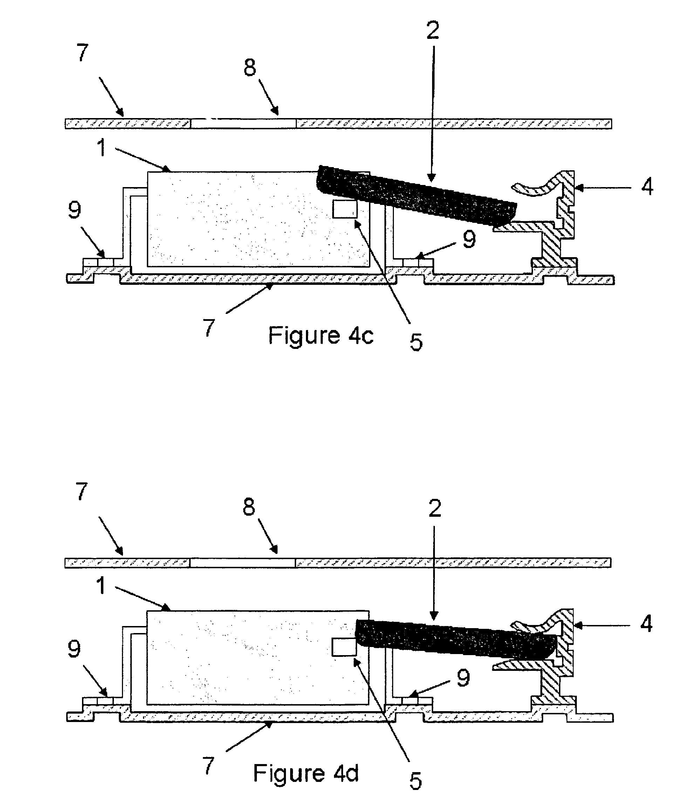

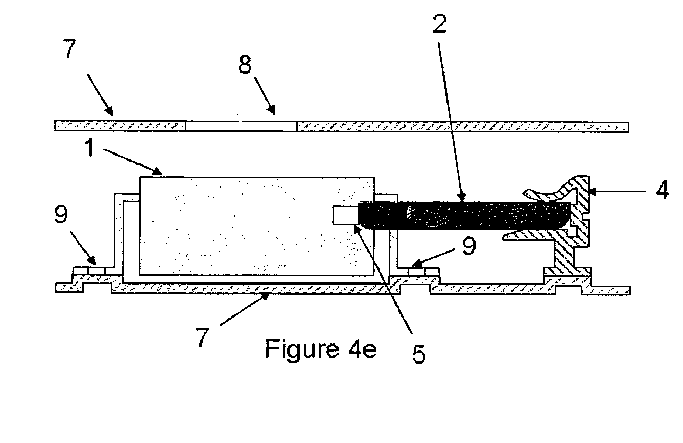

Figs. 4a-4e represent successive steps of the process for introducing the support (2) into the tank, through the stopper orifice (8), and for placing the support (2) between the gauge stand (4) and the flexible part (5).

The support (2) is held in compression between the gauge stand (4) and the flexible part (5) by a spring effect created by the flexible part (5). In this way any deformation of the support (2), for example under the effect of material shrinkage, does not cause displacement of the support capable of modifying the position of the point for fastening the gauge arm (6) to the support (2).

## Claims

1. Plastic fuel tank comprising a wall (7), a gauge, a swirl pot (1) comprising a flexible portion, a gauge stand (4) comprising a housing and a support (2) bearing the gauge and equipped with 2 ends, the swirl pot (1) and the gauge stand (4) being fastened to the tank wall (7) and the gauge support (2) being positioned so that one end of the support (2) cooperates with the housing of the gauge stand (4) and that the other end is in forced contact with the flexible portion (5) of the swirl pot.

2. Plastic fuel tank according to the preceding claim, wherein the gauge consists of a float located at one end of an arm (6), the other end of the arm being fixed to the gauge support (2), at the end cooperating with the housing of the gauge stand.

3. Plastic fuel tank according to any of the preceding claim, wherein the gauge stand (4) is an injection-moulded plastic part that is fastened to the tank wall (7) at a fixed location thereof by a snap-rivet point or a weld point.

4. Plastic fuel tank according to any of the preceding claim, wherein the gauge stand housing comprises at least one flexible portion and one rigid portion capable of together producing a clamping effect so that when the one end of the gauge support has been introduced into the housing and cooperates with the flexible portion and the rigid portion, said end is held in compression between the 2 flexible and rigid portions.

5. Plastic fuel tank according to the preceding claim, wherein the housing of the gauge stand (4) comprises additional rigid portions that are oriented substantially orthogonal to the flexible portion and the rigid portion and which prevent any movement of the end of the gauge support in a direction approximately orthogonal to that in which the end of the support is held in compression.

6. Plastic fuel tank according to any of claims 1 to 3, wherein the housing of the gauge stand (4) is substantially rigid.

7. Plastic fuel tank according to any of the preceding claim, wherein an additional fixation part is used to prevent the support from getting disengaged from the swirl pot and the stand.

8. Process for manufacturing a plastic fuel tank according to any of the preceding claims, by moulding a tubular parison cut into two sheets with the aid of a mould comprising two cavities and a core, said process comprising the following steps:
1. the parison is introduced into the mould cavities;
2. the core is introduced inside the parison, said core having first been fitted with the swirl pot (1) and with a gauge stand (4) comprising a housing;
3. the mould is closed so that the cavities come into leaktight contact with the core;
4. the parison is pressed against the cavities by blowing through the core and/or applying a vacuum behind the cavities;
5. using a device firmly attached to the core, the swirl pot (1) and the gauge stand (4) are fastened to the parison;
6. the mould is opened to withdraw the core;
7. the final moulding of the parison is carried out by blow-moulding (by injecting a pressurized fluid inside the parison) and/or thermo forming (by applying a vacuum behind the cavities);
8. the tank is demoulded.

9. Process according to the preceding claim, said process comprising the additional following steps:
9. a cut is made in a wall (7) of the tank so as to obtain an opening (8); and

10. a support (2) bearing the gauge and equipped with 2 ends is introduced into the tank through the opening (8) and the gauge support (2) is positioned so that one end of the support (2) cooperates with the housing of the gauge stand (4) and so that the other end is in contact with the flexible portion (5).
10. Process according to claim 8, wherein the gauge support is already mounted between the swirl pot and the gauge stand before said swirl pot and gauge stand are being fixed to the parison during step 5.

## Patentansprüche

1. Plastikkraftstofftank aufweisend eine Wand (8), ein Messinstrument, einen Schwalltopf (1) mit einem flexiblen Bereich, einen Messinstrumentsockel (4) mit einem Gehäuse und einem Halter (2), der das Messinstrument hält und mit zwei Enden ausgestattet ist, wobei der Schwalltopf (1) und der Messinstrumentsockel (4) an der Tankwand (7) befestigt sind und der Messinstrumenthalter (2) derart positioniert ist, dass ein Ende des Halters (2) mit dem Gehäuse des Messinstrumentsockels (4) zusammenwirkt und dass das andere Ende in Kontakt mit dem flexiblen Bereich (5) des Schwalltopfs gepresst wird.

2. Plastikkraftstofftank gemäß dem vorangehenden Anspruch, wobei das Messinstrument aus einem Schwimmer besteht, der an einem Ende eines Arms (6) angeordnet ist, wobei das andere Ende des Arms an dem Messinstrumenthalter fixiert ist, an dem Ende, das mit dem Gehäuse des Messinstrumentsockels zusammenwirkt.

3. Plastikkraftstofftank gemäß einem der vorangehenden Ansprüche, wobei der Messinstrumentsockel (4) ein Spritzgussplastikteil ist, das an der Tankwand (7) an einer fixierten Position daran durch einen Schnappnietpunkt oder einen Schweißpunkt befestigt ist.

4. Plastikkraftstofftank gemäß einem der vorangehenden Ansprüche, wobei das Messinstrumentsockelgehäuse zumindest einen flexiblen Bereich und einen starren Bereich aufweist, die fähig sind, zusammen einen Klemmeffekt zu erzeugen, sodass, wenn das eine Ende des Messinstrumenthalters in das Gehäuse eingeführt wurde und mit dem flexiblen Bereich und dem starren Bereich zusammenwirkt, dieses Ende in Kompression zwischen den zwei flexiblen und starren Bereichen gehalten wird.

5. Plastikkraftstofftank gemäß dem vorangehenden Anspruch, wobei das Gehäuse des Messinstrumentsockels (4) zusätzliche starre Bereiche aufweist, die im Wesentlichen orthogonal zu dem flexiblen Bereich und dem starren Bereich orientiert sind und die eine Bewegung des Endes des Messinstrumenthalters in eine Richtung etwa orthogonal zu derjenigen, in der das Ende des Halters in Kompression gehalten ist, vermeiden.

6. Plastikkraftstofftank gemäß einem der Ansprüche 1 bis 3, wobei das Gehäuse des Messinstrumentsockels (4) im Wesentlichen starr ist.

7. Plastikkraftstofftank gemäß einem der vorangehenden Ansprüche, wobei ein zusätzliches Befestigungsteil verwendet ist, um den Halter daran zu hindern, sich von dem Schwalltopf und dem Sockel zu lösen.

8. Verfahren zum Herstellen eines Plastikkraftstofftanks gemäß einem der vorangehenden Ansprüche durch Formen eines röhrenartigen Blasrohlings, der in zwei Bahnen geschnitten ist, mit Hilfe einer Form mit zwei Hohlräumen und einem Kern, wobei das Verfahren die folgenden Schritte aufweist:
1. der Blasrohling wird in die Formhohlräume eingebracht;
2. der Kern wird in den Blasrohling eingebracht, wobei der Kern zuerst mit dem Schwalltopf (1) und einem Messinstrumentsockel (4) aufweisend ein Gehäuse ausgestattet wurde;
3. die Form wird derart geschlossen, dass die Hohlräume in leckdichten Kontakt mit dem Kern kommen;
4. der Blasrohling wird gegen die Hohlräume gepresst durch Einblasen durch den Kern und / oder Ausüben eines Vakuums hinter den Hohlräumen;
5. unter Verwendung einer Vorrichtung, die fest an dem Kern angebracht ist, wird der Schwalltopf (1) und der Messinstrumentsockel (4) an dem Blasrohling befestigt;
6. die Form wird geöffnet, um den Kern herauszunehmen;
7. das abschließende Formen des Blasrohlings wird durchgeführt durch Blas-Formen (durch Einführen eines unter Druck gesetzten Fluids in den Blasrohling) und /oder Thermo-Formen (durch Ausüben eines Vakuums hinter den Hohlräumen);
8. der Tank wird entformt.

9. Verfahren gemäß dem vorangehenden Anspruch, wobei das Verfahren die zusätzlichen folgenden Schritte aufweist:
9. ein Schnitt wird in einer Wand (7) des Tanks derart gemacht, dass eine Öffnung (8) entsteht; und

10. ein Halter (2), der das Messinstrument hält und mit zwei Enden versehen ist, wird in den Tank durch die Öffnung (8) eingeführt und der Messinstrumenthalter (2) wird so positioniert, dass ein Ende des Halters mit dem Gehäuse des Messinstrumentsockels (4) zusammenwirkt und so dass das andere Ende in Kontakt mit dem flexiblen Bereich (5) ist.
10. Verfahren gemäß Anspruch 8, wobei der Messinstrumenthalter bereits zwischen dem Schwalltopf und dem Messinstrumentsockel montiert ist bevor der Schwalltopf und der Messinstrumentsockel an dem Blasrohling während des Schrittes 5 befestigt werden.

## Revendications

1. Réservoir de carburant en matière plastique comportant une paroi (7), une jauge, un bac de réserve (1) comportant une partie flexible, un pied de jauge (4) comportant un logement et un support (2) portant la jauge et équipé de 2 extrémités, le bac de réserve (1) et le pied de jauge (4) étant fixés sur la paroi de réservoir (7) et le support de jauge (2) étant positionné de sorte qu'une extrémité du support (2) coopère avec le logement du pied de jauge (4) et que l'autre extrémité soit en contact forcé avec la partie flexible (5) du bac de réserve.

2. Réservoir de carburant en matière plastique selon la revendication précédente, dans lequel la jauge consiste en un flotteur situé à une extrémité d'un bras (6), l'autre extrémité du bras étant fixée sur le support de jauge (2), à l'extrémité coopérant avec le logement du pied de jauge.

3. Réservoir de carburant en matière plastique selon l'une quelconque des revendications précédentes, dans lequel le pied de jauge (4) est une pièce en matière plastique moulée par injection qui est fixée sur la paroi de réservoir (7) à un emplacement fixe de celle-ci par un point de bouterollage ou un point de soudage.

4. Réservoir de carburant en matière plastique selon l'une quelconque des revendications précédentes, dans lequel le logement du pied de jauge comporte au moins une partie flexible et une partie rigide capables de produire ensemble un effet de serrage de sorte que lorsque la première extrémité du support de jauge a été introduite dans le logement et coopère avec la partie flexible et la partie rigide, ladite extrémité est maintenue en compression entre les 2 parties flexible et rigide.

5. Réservoir de carburant en matière plastique selon la revendication précédente, dans lequel le logement du pied de jauge (4) comporte des parties rigides supplémentaires qui sont orientées de manière sensiblement orthogonale à la partie flexible et à la partie rigide, et qui empêchent tout mouvement de l'extrémité du support de jauge dans une direction approximativement orthogonale à celle dans laquelle l'extrémité du support est maintenue en compression.

6. Réservoir de carburant en matière plastique selon l'une quelconque des revendications 1 à 3, dans lequel le logement du pied de jauge (4) est sensiblement rigide.

7. Réservoir de carburant en matière plastique selon l'une quelconque des revendications précédentes, dans lequel une pièce de fixation supplémentaire est utilisée pour empêcher le support de se libérer du bac de réserve et du pied.

8. Procédé pour fabriquer un réservoir de carburant en matière plastique selon l'une quelconque des revendications précédentes, en moulant une paraison tubulaire découpée en deux feuilles à l'aide d'un moule comportant deux empreintes et un noyau, ledit procédé comportant les étapes suivantes consistant à :
1. introduire la paraison dans les empreintes de moule,
2. introduire le noyau à l'intérieur de la paraison, ledit noyau ayant été préalablement muni du bac de réserve (1) et d'un pied de jauge (4) comportant un logement,
3. fermer le moule de sorte que les empreintes viennent en contact étanche avec le noyau,
4. presser la paraison contre les empreintes par soufflage à travers le noyau et/ou par aspiration sous vide derrière les empreintes,
5. en utilisant un dispositif solidaire du noyau, fixer le bac de réserve (1) et le pied de jauge (4) à la paraison,
6. ouvrir le moule pour retirer le noyau,
7. réaliser le moulage final de la paraison par soufflage (en injectant un fluide sous pression à l'intérieur de la paraison) et/ou par thermoformage (par aspiration sous vide derrière les empreintes),
8. démouler le réservoir.

9. Procédé selon la revendication précédente, ledit procédé comportant les étapes supplémentaires suivantes consistant à :
9. réaliser une découpe dans une paroi (7) du réservoir de manière à obtenir une ouverture (8), et
10. introduire un support (2) portant la jauge et équipé de 2 extrémités dans le réservoir à travers l'ouverture (8) et positionner le support de jauge (2) de sorte qu'une extrémité du support (2) coopère avec le logement du pied de jauge (4) et de sorte que l'autre extrémité soit en contact avec la partie flexible (5).

10. Procédé selon la revendication 8, dans lequel le support de jauge est déjà monté entre le bac de réserve et le pied de jauge avant que ledit bac de réserve et ledit pied de jauge soient fixés à la paraison à l'étape 5.
